# EUROPEAN PATENT APPLICATION

(11) **EP 2 011 739 A1**
(43) Date of publication of application: **07.01.2009**
(21) Application number: 07388051.0
(22) Date of filing: 02.07.2007
(51) Int. Cl.: B65D 25/20, B65D 25/36, B65D 65/40

(54) **Injection moulded packaging article with a barrier layer**

(71) Applicant: Superfos A/S, 4390 Vipperod (DK)
(72) Inventor: Nielsen, Benny Elo, 4400 Kalundborg (DK)
(74) Representative: Sundien, Thomas

(57) **Abstract**

Packaging article for containing and holding food products, which article comprises one or more chambers defined by walls, bottom(s) and lid(s) where the walls, bottom(s) and lid(s) have barrier means for limiting permeability of oxygen through the article and into the one or more chambers, where the barrier properties in the packaging article is provided by In-Mould-Labelling a label (1) comprising a barrier film together with injection moulding the packaging article from a polypropylene (2) and where the barrier means comprises an EVOH or an silicium oxide (SiOx). The barrier means can be embedded in the label (1) for instance by laminating.

## Description

The invention relates to a packaging article for containing and holding food products, which article comprises one or more chambers defined by walls, bottom(s) and lid(s) where the walls, bottom(s) and lid(s) have barrier means for limiting permeability of oxygen through the article and into the one or more chambers.

It is known to produce articles for containing food products from different types of plastic. Plastics are relative easy to mould into a desired configuration.

It is also known to produce articles for containing food products from plastic sheet, film or laminated film.

The plastic sheets or film are made in an extrusion process. The sheet or film material is converted into plastic bags or trays which can be filled with oxygen sensitive food.

These types of trays or containers do not leave the manufacturer much liberty of producing or designing a more welcoming appearance as well as a possibility of puncture of the sheet or film exists and thereby significant shortening the storage life of the food product sometimes even without the puncture being noticed.

Therefore it is desirable to be able to manufacture a packaging article with greater liberty of producing or designing and a more welcoming appearance together with a more stable structure preventing unintended puncturing of parts of the packaging article.

This can be done by injection moulding the packaging article from a polypropylene which gives fine results with regards to designing and a more welcoming appearance as well as an article more resistant for instance to punctures. Unfortunately the oxygen permeability for polypropylene is not satisfactory. When used in combination with food products it is advantageous to have a packaging article with adequate barrier properties.

To give polypropylene better properties regarding to forming an oxygen barrier an other material have been added to the polypropylene before moulding. A material such as ethylene vinyl alcohol (EVOH) have been used to achieve the desired barrier properties.

Further polypropylene makes it possible to perform a heat treatment of the food product placed in the packaging article, which is not possible with all plastics

Attempts to place an EVOH barrier in injection moulded articles have been tried in different ways.

One of the methods for placing an EVOH barrier in an injection moulded article was to mix the EVOH material into the plastic material by compoundering in an extruder before injection moulding the compound into the finished product. A disadvantage with this method is that the required quantity of EVOH to achieve the desired barrier properties is rather large since the EVOH is mixed with the polypropylene before moulding and therefore it is necessary to fill the polypropylene more or less over the complete thickness of material with EVOH. Since EVOH is a rather expensive material the method is not cost-effective.

Another method is to mould in the EVOH material by a sandwich moulding process, where the moulding machine comprises three different moulding units - one for the plastic material - one for a bonding agent for bonding between EVOH and the plastic material - one for EVOH.

This process is very complicated process and is therefore rarely used.

EP 1 023 226 B1 describes a solution where the object is to provide a multilayer plastic bottle having a layer of EVOH, to provide oxygen and CO2 barrier protection, that is approximately 0,05 - 0,08 mm thick.

It is another object of EP 1 023 226 B1 to provide a multilayer plastic bottle having a middle layer of EVOH that has a varying thickness whereby the thickness of the EVOH layer has an even distribution of EVOH throughout the top and middle sections of the body of the bottle and which tapers from the middle section of the bottle to a thinner layer of EVOH at the bottom of the bottle.

It is further an object of EP 1 023 226 B1 to provide a process for making a multilayer preform, which can be used to make a multilayer bottle, having a middle layer of EVOH that has a varying thickness whereby the thickness of the EVOH layer is evenly distributed throughout the top and middle of the body of the preform and tapers to a thinner layer of EVOH near the bottom of the preform.

It is still further an object of EP 1 023 226 B1 to provide a bottle that has a thick layer of EVOH protection and still has a good, strong bottom profile.

This procedure can be difficult to control and it is necessary to perform the moulding in several steps or moulding cycles.

### New technique

To provide a more welcoming appearance and a greater liberty of producing such trays or containers together with improved barrier properties a new tray or container for food products and a new method of manufacturing such a tray or container are developed.

The article is manufactured by placing an In-Mould-Label film (IML film) with a barrier film in an injection mould and thereafter injecting a polypropylene into the mould.

Hereby is achieved a high barrier plastic packaging, which is made by injection moulding. This type of packaging combines the excellent barrier properties in film and sheet material with the high quality and design freedom of injection moulded packaging.

Further it is possible to obtain a more well defined barrier function with the packaging article since the barrier is supplied as a laminated label or film, which is moulded to the packaging article in an "In-Mould-Labelling" process.

The high barrier packaging is finished in one injection moulding cycle comprising two process steps:
- A film with or without decoration and including a barrier is placed in the mould.
- Plastic material such as a polypropylene suitable for contact with food products is injected into the closed mould where the film is placed. The Plastic material is injected into the mould until the mould is filled.

This method using In-Mould-Labelling technology makes the barrier film an integrated part of the injection moulded packaging, where the injected plastic is forming an inner side intended for contact with food products and with the external side formed of an In-Mould-Label.

A suitable material for the barrier as mentioned previously could be EVOH

If the heat treatment takes place at very high temperatures an EVOH barrier perhaps is not the most suitable material since the physical behaviour and strength of EVOH material then depends on the specific material in which the EVOH is laminated or in other way embedded.

In such cases where the heat treatment of the food products takes place at very high temperatures a kind of silicium oxide (SiOx) can be used as barrier in stead. Silicium oxide (SiOx) by the way do not have the same high barrier properties as EVOH, why EVOH is to prefer if possible.

This is achieved by the invention by providing a packaging article where the barrier properties in the packaging article is provided by In-Mould-Labelling a label comprising a barrier film together with injection moulding the packaging article from a polypropylene.

As described in claim 2 according to an embodiment of the invention it is achieved to provide a high barrier packaging article by having barrier means in form of a barrier film comprising an EVOH.

As described in claim 3 according to an embodiment of the invention it is achieved to provide a high temperature tolerant packaging article still having a barrier function by having barrier means in form of a barrier film comprising a silicium oxide (SiOx).

As described in claim 4 according to an embodiment of the invention it is achieved to provide a high barrier packaging article where the barrier means in form of a barrier film is embedded in the label.

As described in claim 5 according to an embodiment of the invention it is achieved to provide a high barrier packaging article where the barrier means in form of a barrier film is embedded in the label by laminating.

As described in claims 6 - 8 according to further embodiments of the invention it is achieved that the barrier gives a sufficient covering of the packaging article.

Embodiments will now be discussed in further detail with reference to the accompanying drawings in which:

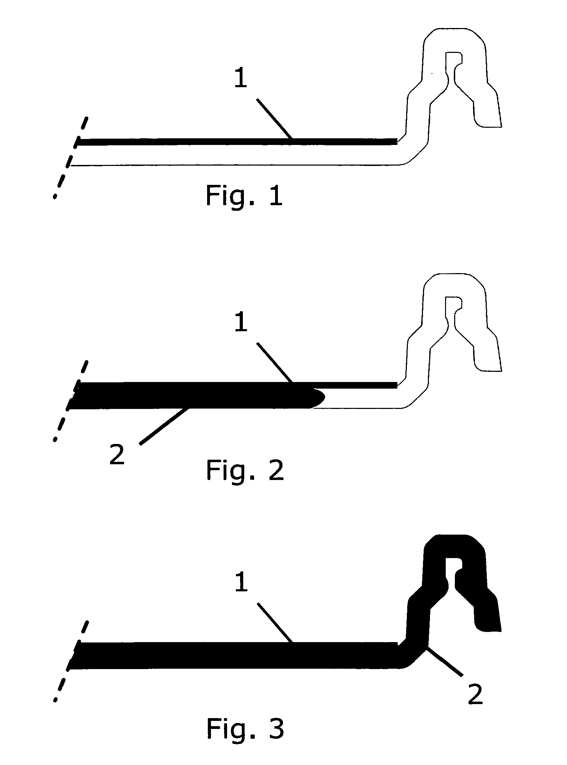

- fig. 1: schematically shows an In-Mould-Label positioned in a mould,
- fig. 2: schematically shows plastic material flowing into the mould during injection,
- fig. 3: schematically shows the plastic material completely filling the mould.

The drawings shows in principle how a lid according to an embodiment of the invention is manufactured. The invention is not limited to a lid but comprises also other parts of the packaging article in such a way that it is possible to manufacture a packaging article with sufficient barrier means to inhibit oxygen to permeate from the surrounding air (atmosphere) and into the package.

In general the article is manufactured by placing an In-Mould-Label film (IML film) 1 including a barrier film in an injection mould and thereafter injecting a polypropylene 2 into the mould.

Hereby is achieved a high barrier plastic packaging, which is made by injection moulding. This type of packaging combines the excellent barrier properties in film and sheet material with the high quality and design freedom of injection moulded packaging.

The high barrier packaging is finished in one injection moulding cycle comprising two process steps:
- A film 1 with or without decoration and including a barrier is placed in the mould.
- Plastic material such as a polypropylene suitable for contact with food products is injected into the closed mould where the film 1 is placed. The Plastic material 2 is injected into the mould until the mould is filled.

This method using In-Mould-Labelling technology makes the barrier film an integrated part of the injection moulded packaging, where the injected plastic 2 is forming an inner side intended for contact with food products and with the external side formed of an In-Mould-Label 1.

In one embodiment of the invention the article is manufactured by placing an In-Mould-Label film (IML film) 1 with an EVOH barrier film in an injection mould and thereafter injecting a polypropylene 2 into the mould.

In such cases where the heat treatment of the food products takes place at very high temperatures a kind of silicium oxide (SiOx) can be used as barrier in stead. Silicium oxide (SiOx) by the way do not have the same high barrier properties as EVOH why EVOH is to prefer if possible.

In another embodiment of the invention the article is manufactured by placing an In-Mould-Label film (IML film) 1 with an silicium oxide (SiOx) barrier film in an injection mould and thereafter injecting a polypropylene 2 into the mould

In a further embodiment the barrier film is embedded in the IML film 1 thereby preventing the barrier film from unintended damaging.

Further it is possible relative to the state of the art to obtain a more well defined barrier function with the packaging article if the barrier is supplied as a laminated label or film 1, which is moulded to the packaging article in an "In-Mould-Labelling" process.

In yet an embodiment the barrier film is embedded in a label 1 by laminating.

If the heat treatment takes place at very high temperatures the EVOH barrier perhaps is not the most suitable material since the physical behaviour and strength of EVOH material then depends on the specific material in which the EVOH is laminated or in other way embedded.

It is obvious that the packaging article can comprise more than one chamber/compartment and eventually one or more lids or lid-portions.

Other possible barrier materials could be a coating of PVDc or a compound of a special nylon such as MXD6 mixed into the basis material. These materials can be used, but a barrier of EVOH gives more effective barrier properties.

To obtain the best results for protecting the products to be kept in the packaging article from an excessive amount of oxygen the aim is to manufacture the packaging article with one or more barriers, which barriers will cover almost the entire outer area or surface of the packaging article. The barrier means covers approximately 90% of the entire outer area or surface of the packaging article, preferably 95 - 100% and more preferably 100% of the entire outer area or surface of the packaging article.

## Claims

1. Packaging article for containing and holding food products, which article comprises one or more chambers defined by walls, bottom(s) and lid(s) where the walls, bottom(s) and lid(s) have barrier means for limiting permeability of oxygen through the article and into the one or more chambers, **characterized in that** the barrier properties in the packaging article is provided by In-Mould-Labelling a label (1) comprising a barrier film together with injection moulding the packaging article from a polypropylene (2).

2. Packaging article according to claim 1, **characterized in that** the barrier means comprises an EVOH.

3. Packaging article according to claim 1, **characterized in that** the barrier means comprises an silicium oxide (SiOx).

4. Packaging article according to claim 1, 2 or 3, **characterized in that** the barrier means is embedded in the label (1).

5. Packaging article according to claim 4, **characterized in that** the barrier means is embedded in the label (1) by laminating.

6. Packaging article according to claim 1, 2, 3, 4 or 5, **characterized in that** the one or more barriers surrounds approximately 90% of the entire outer area or surface of the packaging article.

7. Packaging article according to claim 1, 2, 3, 4 or 5, **characterized in that** the one or more barriers surrounds approximately 95 - 100% of the entire outer area or surface of the packaging article.

8. Packaging article according to claim 1, 2, 3, 4 or 5, **characterized in that** the one or more barriers surrounds 100% of the entire outer area or surface of the packaging article.
